# EUROPEAN PATENT SPECIFICATION

(11) **EP 2 314 467 B1**
(45) Date of publication and mention of the grant of the patent: **01.01.2014**
(21) Application number: 10187133.3
(22) Date of filing: 11.10.2010
(51) Int. Cl.: B60C 23/04, H01Q 1/22, G06K 19/077

(54) **Host article, electronic tag assembly and method for sensing pressure in a pressurized article**
Host-Artikel, elektronische Etikettanordnung und Verfahren zum Messen des Drucks in einem unter Druck stehenden Artikel
Article hôte, ensemble d'étiquette électronique et procédé de détection de la pression dans un article pressurisé

(30) Priority: 23.10.2009 US 604424; 23.10.2009 US 604426
(43) Date of publication of application: 27.04.2011
(73) Proprietor: The Goodyear Tire & Rubber Company, Akron, OH 44316-0001 (US)
(72) Inventor: Fenkanyn, John Michael, Akron, OH 44312 (US)
(74) Representative: Kutsch, Bernd

(56) References cited:
- EP-A1- 0 505 906
- EP-A2- 1 085 046
- EP-A2- 1 870 262
- US-B1- 6 899 153
- US-B2- 7 151 495

## Description

### Field of the Invention

The invention relates generally to electronic tags and, more specifically, to RFID electronic tags, incorporated into a host article or a finished product such as a tire. The invention also relates to a method of sensing pressure in a pressurized article such as a tire.

### Background of the Invention

RFID electronic tags are incorporated into a variety of finished articles or products such as tires. Such tags include an electronic device for storing data such as a product identification number. The data stored within tag memory is transmitted upon receipt of an interrogation signal from the tag to a remote reader during the product life cycle to provide useful information concerning the product.

Tags may further incorporate pressure sensing devices that are exposed to air pressure within the tire cavity. Measured pressure data may be transmitted from the tags to a remote reader upon demand.

EP-A- 1 085 046 describes an electrically conductive rubber composition and an article of manufacture such as a tire having a component thereof. In particular, it describes a tire and an electronic tack assembly comprising an electronic device and an antenna coupled to the electronic device wherein the antenna is at least partially composed of a flexible conductive material including conductive rubber.

A further transponder configuration for integration into a tire and the respective method of manufacturing is described in US-B2- 7 151 495 and in US-B1-6 899 153.

Further tires comprising integrated circuit transponders are described in EP-A- 0 505 906 and EP-A- 1 870 262.

### Summary of the Invention

The invention relates to an assembly in accordance with claim 1 and a method in accordance with claim 10.

Dependent claims refer to preferred embodiments of the invention.

In a preferred aspect of the invention, a product and electronic tag assembly are provided including a rubber-based article portion. The electronic device and antenna attach to or embed within the article portion. The antenna is preferably constructed to be flexible and at least partially composed of a flexible conductive material such as conductive rubber. The conductive material is preferably selected to provide material composition properties substantially equivalent to the article portion, whereby rendering the antenna transparent and mechanically compatible for incorporation into the article portion.

According to another preferred aspect of the invention, the flexible antenna is of a dipole configuration including first and second antenna arms composed of conductive rubber and connected to respective contacts of the electronic device. The flexible antenna arms and the electronic device may be wholly or partially embedded within the article portion or attached thereto.

In yet a further preferred aspect of the invention, the electronic device includes a circuit module and a separator component composed of non-conductive material encasing the circuit module and separating the antenna arms. The antenna arms are secured to the article portion whereby at least a surface portion of the antenna arms faces outwardly and exposed from the article portion in an exposed relationship to an ambient adjacent air mass such as, but not limited to, the air within a tire cavity. The antenna arms may thus be configured and positioned to change transmission characteristics responsive to a change in pressure exerted on the antenna arms by surround article portion material.

In a preferred aspect of the method in accordance with the invention, the method for sensing pressure in a pressurized article utilizes an electronic tag and includes: calculating the impedance of a tag antenna, the tag antenna being flexible and at least partially composed of a flexible conductive pressure sensitive material including rubber; measuring changes in antenna impedance resulting from changes in pressure exerted on the tag antenna; calculating changes in tag transmission signal strength resulting from changes in antenna impedance; at least partially embedding the electronic tag within a wall portion of the article, the wall portion at least partially defining an article cavity and exerting a compressive force on the tag antenna of a magnitude determined by the magnitude of air pressure within the cavity; measuring the tag transmission signal strength with the tag antenna subjected to pressure from the article wall portion; determining the magnitude of air pressure within the cavity required to effect a compressive force on the tag antenna by the article wall sufficient to result in the measured tag transmission signal strength.

In another preferred aspect of the invention, the method includes connecting a first and a second antenna arm comprising the antenna to opposite sides of the electronic device to form a bi-pole antenna configuration and separating inward ends of the first antenna arm from the second antenna arm by a separator component composed at least partially of non-conductive flexible rubber.

According to a further preferred aspect of the invention, the method includes embedding the entirety of the tag within the article wall with the electronic device encased by the separator component and aligning the separator component and the electronic device, and the first and the second antenna arms in a co-linear alignment within the article wall.

### Brief Description of the Drawings

The invention will be described by way of example and with reference to the accompanying drawings in which:
FIG. 1 is a perspective view of a RFID tag representative of the prior art;
FIG. 2 is a perspective view of a RFID tag electronic device pursuant to the invention;
FIG. 3A is a longitudinal sectional view of an RFID tag embodied pursuant to the invention with the intermediary non-conductive separator component removed for the purpose of illustration;
FIG. 3B is a longitudinal sectional view of the RFID tag with the separator component in place;
FIG. 5 is a perspective view of an alternatively configured electronic device in which the integrated circuit chip and contact array comprising the electronic device is not encased within a casing;
FIG. 6 is a longitudinal sectional view of the alternative tag configuration showing encasement of inward ends of the antenna arms by a separator component.
FIG. 7 is a block level diagram of the procedure for configuring and utilizing the tag as a pressure sensor device.

### Detailed Description of the Invention

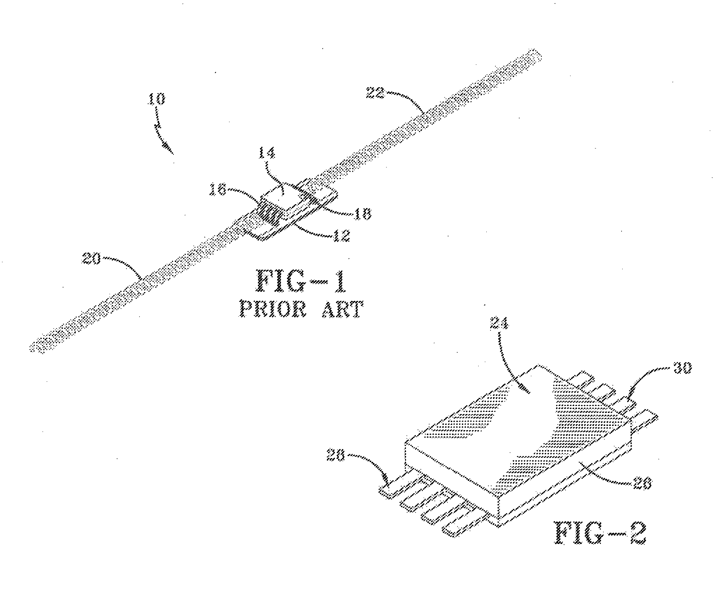

Referring first to FIG. 1, a conventional RFID tag 10 is shown to include a substrate 12 supporting an IC (integrated circuit) package 14 having edge contact arrays 16, 18. A pair of rigid metallic conductive coiled antenna arms 20, 22 are electrically coupled to respective contact arrays 16, 18 of the IC package 14. The IC package includes an IC chip (not shown) of conventional construction for performing data memory and data transmitting functions. The contacts 16, 18 are generally of serpentine configuration extending from the IC chip and bending downward to remote ends supported by the substrate 12. It is to those ends that the coil antenna arms 20, 22 are coupled by soldering or other known techniques.

The dipole antenna constituted by the coils 20,22 communicate data from the IC package 14 to an external reader. The tag 10 may be incorporated into sundry articles or products by embedding the tag 10 within the article or affixing the tag to the article by adhesive or other known techniques. Coupling the tag 10 with an article or product allows information such as product identification data stored within the IC package to be accessed throughout the life cycle of the product.

In some end use applications, the product is subjected to rigorous stresses and strains during normal use. Such forces may cause the antenna arms 20, 22 to separate from the CI contacts 16, 18 and cause a malfunction. Moreover, the material composition of the metallic coil antenna arms 20, 22, the substrate 12, and the IC package 14 may be dissimilar to the material composition of the host article into which the tag is incorporated. In such an event, the tag is considered "non-transparent" and bonding the tag to a portion of the article or product may become problematic. Failure of the bond may cause the entire tag to become separated from the article or product during use.

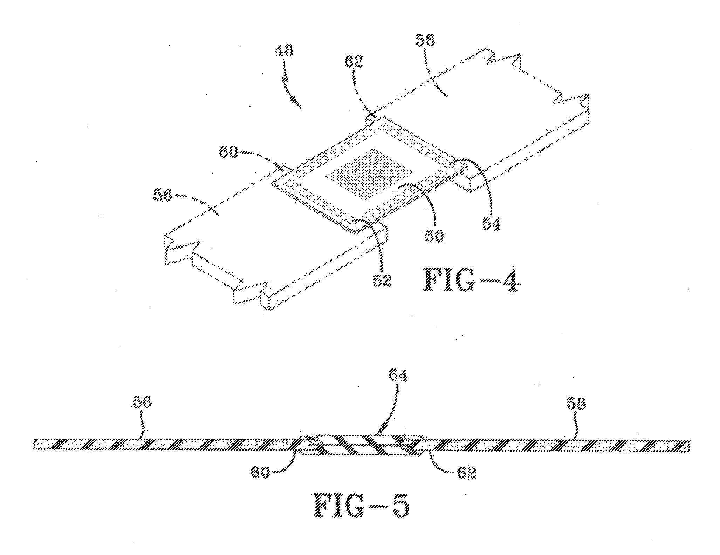

FIG. 2 shows one IC package 24 configured pursuant to the invention. The package includes an outer casing 26 enclosing an IC chip (not shown) from which arrays of contact arms 28, 30 extend in coplanar linear form. The arrays of contacts 28, 30 extend through opposite sides of the casing 26 as shown. Each of the contact arms 28, 30 are elongate and are preferably, although not necessarily, of a straight, non-serpentine configuration, unlike the contacts 16, 18 of the device 14 shown in FIG. 1. As used herein, "electronic device" is used interchangeably with "IC package" and refers to the IC circuitry and contacts used in the performance of tag functions such as identification data storage and transmission. The electronic device may include an outer casing 26 as shown in FIG. 2 or may be configured without a casing as shown in FIG. 4 as will be explained.

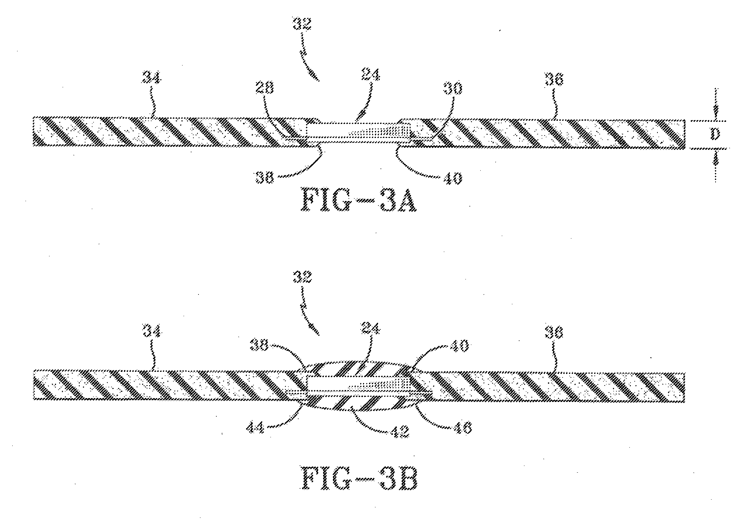

With reference to FIG. 3A, the subject tag 32 is shown. IC package or device 24 is positioned in line with a pair of antenna arms 34, 36. The antenna arms 34, 36 are composed of a conductive rubber compound or matrix from commercially available solid or liquid conductive rubber products such as, but not limited to, Zoflex (manufactured and sold by XILOR Inc., and located in Knoxville, Tennessee). The antenna arms 34, 36 are connected to the RFID electronics at respective arrays of contacts 28, 30. Connection is established by encasing the contacts 28, 30 within inward ends 38, 40 of the arms 34, 36, respectively. The arms 34, 36 are of flexible conductive rubber construction having a thickness or width D at inward ends 38, 40 sufficient to encase the contacts 28, 30 and to overlap respective opposite ends of the electronic device or IC package 24. That is, the depth, width D, is wider than the IC package 24 whereby allowing the antenna arm inward ends 38, 40 to extend over opposite sides and edges of the IC package 24 as seen from FIG. 3A.

FIG. 3B shows the placement of a separator component 42 about the IC package 24. The component 42 encases the IC package 24 and is composed of non-conductive material such as a non-conductive rubber. The component 42 thus electrically separates the antenna arms 34, 36 and further serves to protect the IC package 24. Preferably, although not necessarily, ends 44, 46 of the separator component 42 will overlap the ends 38, 40 of the arms 34, 36, thus creating a complete rubber-based casing of the entire tag assembly. That is, the entire tag 32 is sheathed in a rubber base that will be transparent when embedded into an article or product such as a tire that is composed primarily of rubber. The RFID tag 32 thereby lends itself to a low cost method of production such as an extrusion process in which the conductive arm 34, IC device 24, non-conductive separator component 42, and conductive arm 36 are sequentially extruded into a finished tag. The resultant tag will be flexible and bond better and more easily into a rubber product such as a tire. Moreover, because the components are of rubber materials, the tag is more non-obtrusive within a tire portion such as a wall, making the bonding of the tag to the tire stronger and less prone to failure. The risk of tag separation from the tire is thereby minimized.

FIGS. 3A and 3B show a tag embodiment in which the electronics is encased. FIGS. 4 and 5 show an alternative tag embodiment 48 that eliminates the encasement package of the electronics and affixes flexible conductive rubber-based antenna arms 56, 58 directly to edge contacts 52, 54 of an integrated circuit 50. The IC 50 has arrays of contacts 52, 54 along opposite edges. The antenna arms 56, 58 composed as described above from flexible conductive rubber. inward ends 60, 62 of the arms 56, 58 affix over the edges of the IC and thereby establish electrical contact. The diameter or thickness of the arms 56, 58 is greater than the thickness of the IC 50. A separator 64, as shown by FIG. 5, encases the IC 50 and is dimensioned to overlap the inward ends 60, 62 of the arms 56, 58. The separator component 64 is formed of non-conductive material such as rubber. The resulting tag shown in FIG. 5 is thus completely encased by a material (rubber) compatible with and transparent to the material of a host rubber article such as a tire. The IC 50 is further protected by the flexible external sheath created by the arms 56, 58 and the separator component 64.

The tag 48 can be inserted in its entirety within a wall of an article or product such as a tire sidewall. The RFID tag becomes transparent when embedded into the tires because tires are likewise composed primarily of rubber having generally the same mechanical and material properties as the tag antenna arms 56, 58. As a result, performance of the tire is not degraded by the presence of the tag 48 and a bonding of the tag within a tire sidewall is less likely to fail over time from tire use. Compatibility is used herein to mean materials having like mechanical and material properties. Compatibility between the tag 48 composition and that of the host tire product portion into which the tag is embedded thus creates a desired transparency between the tag and the tire.

The tag 48 may be completely embedded within a wall of the tire; partially embedded; or externally affixed by adhesive or other means. When completely embedded, the flexibility of the tag will complement the flexibility the surrounding tire wall (i.e. become transparent). If partially embedded, a portion of the tag 48 will remain exposed. If affixed by adhesive, the tag 48 will be exposed to the ambient air cavity. It is commonplace to internally mount an RFID to either a tire sidewall defining the tire cavity or to an underside of the tire tread tire portion defining the cavity. So positioned, the tag 48 is proximate to the tire cavity that becomes pressurized when the tire is mounted to a wheel.

It is contemplated that the tag, whether in the configuration 32 or 48, when mounted to tire, will function to transmit product identification data, when subjected to an interrogation signal, to a remote reader by means of the dipole antenna arms 34, 36 (FIGS. 3A, 3B) or 56, 58 (FIGS 4, 5). The use of the RFID tag may be extended if desired for deployment as a low cost, durable and passive (requiring no internal power source) pressure sensor for detecting air pressure within an adjacent pressurized ambient air mass. In a tire, the tag can serve as a pressure sensor for measuring the air pressure within a tire cavity. For use as a pressure sensor in a tire, the tag antenna arms are composed of a flexible, electrically conductive, and pressure sensitive material such as conductive polymers or a pressure sensitive polymer. Such a material is commercially available from XILOR, Inc. The signal strength returned from the RFID tag when it is interrogated will vary based on the surrounding pressure brought to bear on the tag antenna arms because the impedance of the rubber changes with pressure.

If the RFID tag and its antenna arms are completely embedded within a rubber composed wall of an article or product, the RFID tag by varying signal strength will indicated changes of pressure within that wall bearing upon the tag. In the case of measuring tire cavity air pressure, the tag may be embedded within a wall of the tire defining the tire cavity. Changes in air pressure within the cavity will change compression forces within the tire walls defining the tire and will thereby vary the compressive forces bearing on the antenna arms. The change in compression forces on the tag antenna arms will be reflected in a variance in signal strength, whereby serving to communicate tire cavity air pressure.

The RFID tag may also be partially embedded within the tire wall such that a portion or the entirety of the antenna arms remain exposed to the ambient air mass within the tire cavity. In this system, changes in tire cavity air pressure will directly impact against the tag antenna arms and change impedance of the rubber therein. The change in signal strength can be detected by an external reader and calculations made to determine the air pressure within the cavity that correlates with the impedance values within the antenna arm rubber. Likewise, the tag may be mounted against the tire sidewall by adhesive agents or the like, and a similar procedure used to measure the signal variation resulting from pressure changes against the tag antenna arms.

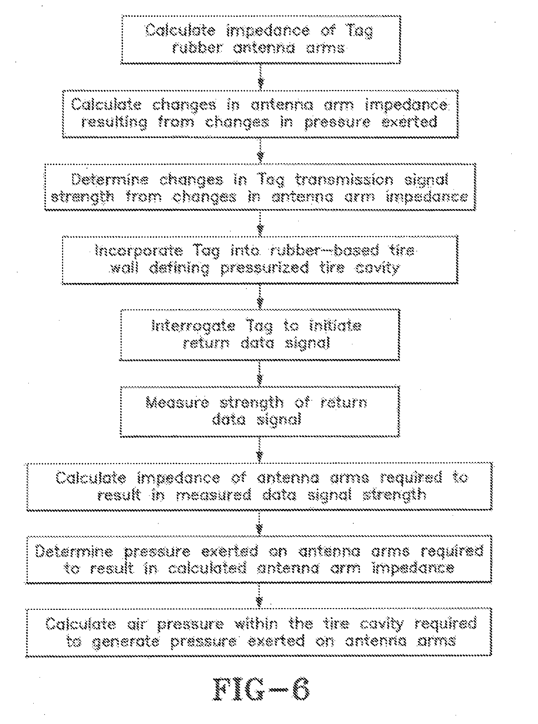

In the aforementioned pressure sensor applications, as seen from the block diagram of FIG. 6, it is necessary to first study and calculate the conductive rubber within the antenna arms and how the impedance will vary according to pressure on the arms. Once such a study and calculations are completed, pressure sensor application of the tag within a product and article can be made. An interrogation of the tag from an external signal will result in data transmission from the tag to a reader. The transmission signal can then be analyzed and, from its strength, the impedance of the antenna arms deduced. From the impedance value thus calculated, the pressure against the antenna arms may be determined and a conclusion of air pressure within the tire cavity necessary to produce such a pressure on the arms can be calculated.

With specific reference to FIG. 6, the procedure for implementing a pressure sensor tag application is as follows: calculate impedance of tag rubber antenna arms; calculate changes in antenna arm impedance resulting from changes in pressure exerted on antenna arms; determine changes in tag transmission signal strength from changes in antenna arm impedance; incorporate tag into rubber-based tire wall defining pressurized tire cavity; interrogate tag to initiate return data signal; measure strength of return data signal; calculate impedance of antenna arms required to result in measured data signal strength; determine pressure exerted on antenna arms required to result in calculated antenna arm impedance; calculate air pressure within the tire cavity required to generate pressure exerted on antenna arms.

With reference to FIG. 6, the procedure for implementing a pressure sensor tag application may also be as follows: calculating the impedance of a tag antenna, the tag antenna being flexible and at least partially composed of a flexible conductive pressure sensitive material including rubber; measuring changes in antenna impedance resulting from changes in pressure exerted on the tag antenna; calculating changes in tag transmission signal strength resulting from changes in antenna impedance; at least partially embedding the electronic tag within a wall portion of the article, the wall portion at least partially defining an article cavity and exerting a compressive force on the tag antenna of a magnitude determined by the magnitude of air pressure within the cavity; measuring the tag transmission signal strength with the tag antenna subjected to pressure from the article wall portion; determining the magnitude of air pressure within the cavity required to effect a compressive force on the tag antenna by the article wall sufficient to result in the measured tag transmission signal strength.

## Claims

1. A host article and electronic tag assembly, the assembly comprising:
a tag (32, 48) comprising an electronic device (24, 50) for storing article-specific data, the electronic device (24, 50) having external contact means;
an antenna coupled to the electronic device (24, 50) for transmitting stored data to a remote reader device; and
an article portion composed at least partially of a material composition including rubber, the electronic device (24, 50) and antenna attaching to the article portion;
wherein the antenna is at least partially composed of a flexible conductive material, the flexible conductive material at least partially including conductive rubber; and
wherein the article comprises a tire comprising a cavity defined by internal walls of the tire including the article portion,
**characterized in that** the host article and the electronic tag assembly is configured such that a pressure of an air mass within the cavity operatively compresses the article portion material by a compressive force, the compressive force within the article portion being directed against the antenna arms (34, 36, 56, 58) and such that operatively a change in a magnitude of a compressive force against the antenna arms (34, 36, 56, 58) changes electrical impedance characteristics of the antenna arms (34, 36, 56, 58), the change of electrical impedance characteristics of the antenna arms (34, 36, 56, 58) resulting in a detectable variation in the strength of a signal transmitted from the tag (32, 48).

2. The assembly of claim 1 wherein the flexible conductive material has material composition properties substantially equivalent to the article portion whereby rendering the antenna mechanically compatible for incorporation into the article portion.

3. The assembly of claim 1 or 2 wherein the antenna comprises first and second antenna arms (34, 36, 56, 58) encasing and in electrically contacting engagement with respective interconnection edge contacts (28, 30, 52, 54) spaced along respective outward sides of the electronic device (24, 50), the interconnection edge contacts (28, 30, 52, 54) preferably extending from the electronic device (24, 50) in a substantially planar configuration.

4. The assembly of claim 3 wherein the interconnection edge contacts (28, 30, 52, 54) are encased within an inward end (38, 40, 60, 62) of a respective antenna arm (34, 36, 56, 58).

5. The assembly of claim 4 wherein the inward end (38, 40, 60, 62) of each antenna arm (34, 36, 56, 58) has a thickness (D) greater than an edge thickness of the electronic device (24, 50), the inward ends (38, 40, 60, 62) of the antenna arms (34, 36, 56, 58) preferably overlapping respective edges of the electronic device (24, 50).

6. The assembly of at least one of the previous claims wherein the antenna is flexible and/or wherein the antenna comprises flexible antenna arms (34, 36, 56, 58) which are composed substantially exclusively of a conductive rubber compound.

7. The assembly of at least one of the previous claims wherein the tag (32, 48) comprises a separator component (42, 64) composed of a non-conductive material encasing the electronic device (24, 50) and separating the antenna arms (34, 36, 56, 58).

8. The assembly of at least one of the previous claims wherein the tag (32, 48) comprises a separator component (42, 64), the separator component (42, 64) comprising outward ends having a thickness greater than a thickness (D) of inward ends (38, 40, 60, 62) of the antenna arms (34, 36, 56, 58), the outward ends of the separator component (42, 64) preferably overlapping a respective inward end (38, 40, 60, 62) of a respective antenna arm (34, 36, 56, 58).

9. The assembly of at least one of the previous claims wherein the antenna arms (34, 36, 56, 58) are secured to the article portion whereby:
(i) the antenna arms (34, 36, 56, 58) are surrounded at least partially by a rubber composed article portion extending to an adjacent ambient air mass, the ambient air mass preferably residing within a cavity in the article; and/or
(ii) the antenna arms (34, 36, 56, 58) are substantially embedded within the article portion.

10. A method for sensing pressure in a pressurized article utilizing an electronic tag, the tag (32, 48) being of a type having an electronic device (24, 50) storing article-specific data and an antenna coupled to the electronic device (24, 50) for transmitting a tag transmission signal to a remote reader device, the method comprising:
calculating the impedance of the antenna;
measuring changes in the impedance of the antenna resulting from changes in pressure exerted on the antenna;
calculating changes in a tag transmission signal strength resulting from changes in antenna impedance;
at least partially embedding the tag (32, 48) within a wall portion of an article, the wall portion at least partially defining an article cavity and exerting a compressive force on the tag antenna of a magnitude determined by the magnitude of air pressure within the cavity;
measuring a tag transmission signal strength with the antenna subjected to pressure from the article wall portion;
determining the magnitude of air pressure within the cavity required to effect a compressive force on the antenna by the article wall sufficient to result in the measured tag transmission signal strength.

11. The method of claim 10 further comprising connecting a first and a second antenna arm (34, 36, 56, 58) comprising the antenna to opposite sides of the electronic device (24, 50) to form a bi-pole antenna configuration, and, optionally, further comprising separating inward ends (38, 40, 60, 62) of a first antenna arm from a second antenna arm by a separator component (42, 64) composed at least partially of non-conductive flexible rubber.

12. The method of claim 10 or 11 further comprising one or a combination of two or more of the following steps:
(i) substantially embedding the entirety of the tag (32, 50) within the article wall;
(ii) encasing the electronic device (24, 50) by the separator component (42, 64);
(iii) overlapping inward ends of the first and the second antenna arms (34, 36, 56, 58) by the separator component (42, 64);
(iv) aligning the separator component (42, 64) with the electronic device (24, 50);
(v) bringing the first and the second antenna arms (34, 36, 56, 58) in a co-linear alignment within the article wall;
(vi) providing an antenna which is at least partially composed of a flexible conductive material, the flexible conductive material at least partially including a conductive rubber.

## Patentansprüche

1. Anordnung aus elektronischem Etikett bzw. Tag und dieses aufnehmendem Gegenstand, wobei die Anordnung umfasst:
ein Tag (32, 48), umfassend eine elektronische Vorrichtung (24, 50) zum Speichern gegenstandsspezifischer Daten, wobei die elektronische Vorrichtung (24, 50) äußere Kontaktmittel aufweist;
eine an die elektronische Vorrichtung (24, 50) gekoppelte Antenne zur Übertragung gespeicherter Daten zu einer entfernt befindlichen Lesevorrichtung; und
einen Gegenstandsteil, mindestens teilweise aus einer Kautschuk beinhaltenden Materialzusammensetzung zusammengesetzt, wobei die elektronische Vorrichtung (24, 50) und Antenne an dem Gegenstandsteil befestigt sind;
wobei die Antenne mindestens teilweise aus einem flexiblen leitfähigen Material zusammengesetzt ist, wobei das flexible leitfähige Material, mindestens teilweise, leitfähigen Kautschuk beinhaltet; und
wobei der Gegenstand einen Reifen umfasst, der einen Hohlraum umfasst, der durch Innenwände des Reifens einschließlich des Gegenstandsteils definiert ist,
**dadurch gekennzeichnet, dass** die Anordnung aus dem aufnehmendem Gegenstand und dem elektronischen Tag so konfiguriert ist, dass ein Druck einer Luftmasse in dem Hohlraum das Material des Gegenstandsteils durch eine Kompressionskraft wirksam komprimiert, wobei die Kompressionskraft in dem Gegenstandsteil gegen die Antennenarme (34, 36, 56, 58) gerichtet ist, und so, dass auf wirksame Weise eine Veränderung in einer Größenordnung einer Kompressionskraft gegen die Antennenarme (34, 36, 56, 58) elektrische Impedanzmerkmale der Antennenarme (34, 36, 56, 58) verändert, wobei die Veränderung elektrischer Impedanzmerkmale der Antennenarme (34, 36, 56, 58) in einer erfassbaren Schwankung in der Stärke eines von dem Tag (32, 48) übertragenen Signals resultiert.

2. Anordnung nach Anspruch 1, wobei das flexible leitfähige Material Materialzusammensetzungseigenschaften aufweist, die im Wesentlichen äquivalent zu dem Gegenstandsteil sind, wodurch die Antenne mechanisch kompatibel für eine Integration in den Gegenstandsteil wird.

3. Anordnung nach Anspruch 1 oder 2, wobei die Antenne erste und zweite Antennenarme (34, 36, 56, 58) umfasst, die jeweilige Verbindungs-Randkontakte (28, 30, 52, 54), die entlang jeweiligen äußeren Seiten der elektronischen Vorrichtung (24, 50) voneinander beabstandet sind, umhüllen und in elektrischem Kontakteingriff damit sind, wobei die Verbindungs-Randkontakte (28, 30, 52, 54) sich bevorzugt in einer im Wesentlichen planaren Konfiguration von der elektronischen Vorrichtung (24, 50) erstrecken.

4. Anordnung nach Anspruch 3, wobei die Verbindungs-Randkontakte (28, 30, 52, 54) in einem einwärts befindlichen Ende (38, 40, 60, 62) eines jeweiligen Antennenarms (34, 36, 56, 58) umhüllt sind.

5. Anordnung nach Anspruch 4, wobei das einwärts befindliche Ende (38, 40, 60, 62) jedes Antennenarms (34, 36, 56, 58) eine Dicke (D) aufweist, die größer als eine Randdicke der elektronischen Vorrichtung (24, 50) ist, wobei die einwärts befindlichen Enden (38, 40, 60, 62) der Antennenarme (34, 36, 56, 58) bevorzugt jeweilige Ränder der elektronischen Vorrichtung (24, 50) überlappen.

6. Anordnung nach mindestens einem der vorgenannten Ansprüche, wobei die Antenne flexibel ist und/oder wobei die Antenne flexible Antennenarme (34, 36, 56, 58) umfasst, die im Wesentlichen ausschließlich aus einer leitfähigen Kautschukmischung zusammengesetzt sind.

7. Anordnung nach mindestens einem der vorgenannten Ansprüche, wobei das Tag (32, 48) ein Abstandhalter-Bauteil (42, 64) umfasst, das aus einem nicht leitfähigen Material zusammengesetzt ist, das die elektronische Vorrichtung (24, 50) umhüllt und die Antennenarme (34, 36, 56, 58) voneinander trennt.

8. Anordnung nach mindestens einem der vorgenannten Ansprüche, wobei das Tag (32, 48) ein Abstandhalter-Bauteil (42, 64) umfasst, wobei das Abstandhalter-Bauteil (42, 64) auswärts befindliche Enden umfasst, die eine Dicke aufweisen, die größer als eine Dicke (D) einwärts befindlicher Enden (38, 40, 60, 62) der Antennenarme (34, 36, 56, 58) ist, wobei die auswärts befindlichen Enden des Abstandhalter-Bauteils (42, 64) bevorzugt ein jeweiliges einwärts befindliches Ende (38, 40, 60, 62) eines jeweiligen Antennenarms (34, 36, 56, 58) überlappen.

9. Anordnung nach mindestens einem der vorgenannten Ansprüche, wobei die Antennenarme (34, 36, 56, 58) an dem Gegenstandsteil gesichert sind, wobei:
(i) die Antennenarme (34, 36, 56, 58) mindestens teilweise von einem aus Kautschuk zusammengesetzten Gegenstandsteil umgeben sind, der sich bis zu einer benachbarten Umgebungsluftmasse erstreckt, wobei die Umgebungsluftmasse sich bevorzugt in einem Hohlraum in dem Gegenstand befindet; und/oder
(ii) die Antennenarme (34, 36, 56, 58) im Wesentlichen in dem Gegenstandsteil eingebettet sind.

10. Verfahren zur Druckerfassung in einem unter inneren Überdruck gesetzten Gegenstand unter Nutzung eines elektronischen Tags, wobei das Tag (32, 48) von einem Typ ist, der eine elektronische Vorrichtung (24, 50), die gegenstandsspezifische Daten speichert, und eine an die elektronische Vorrichtung (24,50) gekoppelte Antenne zur Übertragung eines Tag-Übertragungssignals an eine entfernt befindliche Lesevorrichtung aufweist, wobei das Verfahren umfasst:
Berechnen der Impedanz der Antenne;
Messen von Veränderungen in der Impedanz der Antenne, die von auf die Antenne ausgeübten Druckänderungen herrühren;
Berechnen von Veränderungen in einer Tag-Übertragungssignalstärke, die von Veränderungen in der Antennenimpedanz herrühren;
mindestens teilweise Einbetten des Tags (32, 48) in einen Wandteil eines Gegenstandes, wobei der Wandteil mindestens teilweise einen Hohlraum des Gegenstandes definiert und eine Kompressionskraft von einer durch die Größenordnung des Luftdrucks in dem Hohlraum bestimmten Größenordnung auf die Tag-Antenne ausübt;
Messen einer Tag-Übertragungssignalstärke, wobei die Antenne Druck von dem Wandteil des Gegenstandes unterzogen wird;
Ermitteln der Größenordnung des Luftdrucks in dem Hohlraum, die erforderlich ist, um mittels der Wand des Gegenstandes eine Kompressionskraft auf die Antenne auszuüben, die ausreicht, um in der gemessenen Tag-Übertragungssignalstärke zu resultieren.

11. Verfahren nach Anspruch 10, weiter das Verbinden eines ersten und eines zweiten Antennenarms (34, 36, 56, 58), die die Antenne umfassen, mit entgegengesetzten Seiten der elektronischen Vorrichtung (24, 50), um eine Dipol-Antennenkonfiguration zu bilden, und gegebenenfalls weiter das Trennen einwärts befindlicher Enden (38, 40, 60, 62) eines ersten Antennenarms von einem zweiten Antennenarm mittels eines Abstandhalter-Bauteils (42, 64), das mindestens teilweise aus nicht leitfähigem flexiblem Kautschuk zusammengesetzt ist, umfassend.

12. Verfahren nach Anspruch 10 oder 11, weiter einen oder eine Kombination von zwei oder mehreren der folgenden Schritte umfassend:
(i) im Wesentlichen Einbetten des gesamten Tags (32, 50) in der Wand des Gegenstandes;
(ii) Umhüllen der elektronischen Vorrichtung (24, 50) durch das Abstandhalter-Bauteil (42, 64);
(iii) Überlappen einwärts befindlicher Enden der ersten und zweiten Antennenarme (34, 36, 56, 58) durch das Abstandhalter-Bauteil (42, 64);
(iv) Ausrichten des Abstandhalter-Bauteils (42, 64) zu der elektronischen Vorrichtung (24, 50);
(v) in eine co-lineare Ausrichtung in der Wand des Gegenstandes Bringen der ersten und der zweiten Antennenarme (34, 36, 56, 58);
(vi) Anbringen einer Antenne, die mindestens teilweise aus einem flexiblen leitfähigen Material zusammengesetzt ist, wobei das flexible leitfähige Material mindestens teilweise einen leitfähigen Kautschuk beinhaltet.

## Revendications

1. Assemblage d'un article hôte et d'une étiquette électronique, l'assemblage comprenant :
une étiquette (32, 48) comprenant un dispositif électronique (24, 50) pour stocker des données spécifiques à un article, le dispositif électronique (24, 50) possédant un moyen de contact externe ;
une antenne couplée au dispositif électronique (24, 50) pour transmettre des données stockées à un dispositif de lecture à distance ; et
une portion d'article composée au moins en partie d'une composition de matière englobant du caoutchouc, le dispositif électronique (24, 50) et l'antenne étant fixés à la portion d'article ;
dans lequel l'antenne se compose au moins en partie d'une matière flexible conductrice, la matière flexible conductrice englobant au moins en partie du caoutchouc conducteur ; et
dans lequel l'article comprend un bandage pneumatique comprenant une cavité définie par des parois internes du bandage pneumatique englobant la portion d'article ;
**caractérisé en ce que** l'assemblage de l'article hôte et de l'étiquette électronique est configuré de telle sorte que la pression d'une masse d'air au sein de la cavité comprime de manière opérante la matière de la portion d'article via une force de compression, la force de compression au sein de la portion d'article étant orientée dans la direction des bras d'antenne (34, 36, 56, 58) et de telle sorte qu'un changement, de manière opérante, concernant l'intensité de la force de compression s'exerçant sur les bras d'antenne (34, 36, 56, 58) modifie les caractéristiques d'impédance électrique des bras d'antenne (34, 36, 56, 58), le changement quant aux caractéristiques d'impédance électrique des bras d'antenne (34, 36, 56, 58) donnant lieu à une variation détectable de la force d'un signal émis par l'étiquette (32, 48).

2. Assemblage selon la revendication 1, dans lequel la matière flexible conductrice possède des propriétés de composition de matière essentiellement équivalentes à celles de la portion d'article, ce qui rend l'antenne mécaniquement compatible à des fins d'incorporation dans la portion d'article.

3. Assemblage selon la revendication 1 ou 2, dans lequel l'antenne comprend un premier et un deuxième bras d'antenne (34, 36, 56, 58) entourant et entrant en contact électrique avec des contacts marginaux d'interconnexion respectifs (28, 30, 52, 54) espacés le long des côtés externes respectifs du dispositif électronique (24, 50), les contacts marginaux d'interconnexion respectifs (28, 30, 52, 54) s'étendant de préférence depuis le dispositif électronique (24, 50) dans une configuration essentiellement plane.

4. Assemblage selon la revendication 1, dans lequel les contacts marginaux d'interconnexion respectifs (28, 30, 52, 54) sont entourés par l'extrémité interne (38, 40, 60, 62) d'un bras d'antenne respectif (34, 36, 56, 58).

5. Assemblage selon la revendication 4, dans lequel l'extrémité interne (38, 40, 60, 62) de chaque bras d'antenne (34, 36, 56, 58) possède une épaisseur (D) supérieure à l'épaisseur marginale du dispositif électronique (24, 50), les extrémités internes (38, 40, 60, 62) des bras d'antenne (34, 36, 56, 58) chevauchant de préférence des bords respectifs du dispositif électronique (24, 50).

6. Assemblage selon au moins une des revendications précédentes, dans lequel l'antenne est flexible et/ou dans lequel l'antenne comprend des bras d'antenne flexibles (34, 36, 56, 58) qui se composent exclusivement d'un composé de caoutchouc conducteur.

7. Assemblage selon au moins une des revendications précédentes, dans lequel l'étiquette (32, 48) comprend un composant faisant office de séparateur (42, 64) qui se compose d'une matière non conductrice entourant le dispositif électronique (24, 50) et séparant les bras d'antenne (34, 36, 56, 58).

8. Assemblage selon au moins une des revendications précédentes, dans lequel l'étiquette (32, 48) comprend un composant faisant office de séparateur (42, 64), l'élément faisant office de séparateur (42, 64) comprenant des extrémités externes dont l'épaisseur est supérieure à l'épaisseur (D) des extrémités internes (38, 40, 60, 62) des bras d'antenne (34, 36, 56, 58), les extrémités externes du composant faisant office de séparateur (42, 64) chevauchant de préférence une extrémité interne respective (38, 40, 60, 62) d'un bras d'antenne respectif (34, 36, 56, 58).

9. Assemblage selon au moins une des revendications précédentes, dans lequel les bras d'antenne flexibles (34, 36, 56, 58) sont fixés la portion d'article, si bien que :
(i) les bras d'antenne (34, 36, 56, 58) sont entourés au moins en partie par une portion composée de caoutchouc s'étendant jusqu'à une masse d'air ambiant adjacente ; et/ou
(ii) les bras d'antenne (34, 36, 56, 58) sont enrobés en partie au sein de la portion d'article.

10. Procédé pour détecter la pression régnant dans un article mis sous pression en utilisant une étiquette électronique, l'étiquette (32, 48) étant du type possédant un dispositif électronique (24, 50) qui stocke des données spécifiques à l'article et une antenne couplée au dispositif électronique (24, 50) pour la transmission d'un signal de transmission d'étiquette à un dispositif de lecture à distance, le procédé comprenant le fait de :
calculer l'impédance de l'antenne ;
mesurer les changements d'impédance de l'antenne, qui résultent des changements de pression s'exerçant sur l'antenne ;
calculer les changements de l'intensité du signal de transmission d'étiquette, qui résultent des changements concernant l'impédance de l'antenne ;
enrober au moins en partie l'étiquette (32, 48) au sein d'une portion de paroi d'un article, la portion de paroi définissant au moins en partie une cavité d'article et exerçant une force de compression sur l'antenne d'étiquette dont la valeur est déterminée par la valeur de la pression d'air régnant au sein de la cavité ;
mesurer l'intensité du signal de transmission d'étiquette lorsque l'antenne est soumise à une pression émanant de la portion de paroi de l'article ;
déterminer la valeur de la pression d'air au sein de la cavité requise pour exercer une force de compression sur l'antenne via la paroi d'article, suffisante pour obtenir l'intensité mesurée du signal de transmission d'étiquette.

11. Procédé selon la revendication 10, comprenant en outre le fait de raccorder un premier et un deuxième bras d'antenne (34, 36, 56, 58) comprenant l'antenne à des côtés opposés du dispositif électronique (24, 50) afin d'obtenir une configuration d'antenne bipolaire et, le cas échéant, comprenant la séparation des extrémités internes (38, 40, 60, 62) d'un premier bras d'antenne par rapport à un deuxième bras d'antenne via un composant faisant office de séparateur (42, 64) qui se compose au moins en partie de caoutchouc flexible non conducteur.

12. Procédé selon la revendication 10 ou 11, comprenant en outre un ou plusieurs des étapes suivantes ou encore une combinaison de deux desdites étapes ou plus :
(i) enrober de manière substantielle la totalité de l'étiquette (32, 50) au sein de la paroi d'article ;
(ii) utiliser le composant faisant office de séparateur (42, 64) pour entourer le dispositif électronique (24, 50) ;
(iii) faire en sorte que le composant faisant office de séparateur (42, 64) chevauche les extrémités internes des premier et deuxième bras d'antenne (34, 36, 56, 58) ;
(iv) aligner le composant faisant office de séparateur (42, 64) avec le dispositif électronique (24, 50) ;
(v) amener les premier et deuxième bras d'antenne (34, 36, 56, 58) en alignement colinéaire au sein de la paroi d'article ;
(vi) procurer une antenne qui se compose au moins en partie d'une matière flexible conductrice, la matière flexible conductrice englobant en partie un caoutchouc conducteur.
